# EUROPÄISCHE PATENTSCHRIFT

(11) **EP 2 263 436 B1**
(45) Veröffentlichungstag und Bekanntmachung des Hinweises auf die Patenterteilung: **16.01.2013**
(21) Anmeldenummer: 10006294.2
(22) Anmeldetag: 17.06.2010
(51) Int. Cl.: A01B 45/00, A01D 43/02

(54) **Landschaftspflegegerät o. dgl. Maschine**
Landscape care device or similar machine
Appareil pour l'entretien paysager ou autre machine analogue

(30) Priorität: 18.06.2009 DE 102009029809
(43) Veröffentlichungstag der Anmeldung: 22.12.2010
(73) Patentinhaber: Tielbürger, Dirk, 32369 Rahden (DE)
(72) Erfinder: Tielbürger, Dirk, 32369 Rahden (DE)
(74) Vertreter: Engelmann, Kristiana

(56) Entgegenhaltungen:
- EP-A1- 1 338 185
- US-A- 3 964 243
- US-A1- 2006 123 765
- US-A1- 2006 236 670

## Beschreibung

Die Erfindung betrifft ein Landschaftspflegegerät in Form eines Rasentraktors, einer Kehrmaschine, gemäß dem Oberbegriff des Anspruchs 1.

Landschaftspflegegeräte, insbesondere mit zur Rasenbearbeitung vorgesehenen Pflegewerkzeugen, sind seit langem bekannt. Diese können zusätzlich zum Mähwerk mit einem Vertikutierer versehen sein, wobei dieser einen mit Federzinken versehenen Tragbalken in Form einer Walze, einer Strebe o. dgl. Konstruktionen aufweist.

Diese Federzinken werden dabei in unterschiedlichsten Ausführungen durch zusätzliche Schraubverbindungen am Tragbalken festgelegt, so dass bei einem insbesondere verschleißbedingten Auswechseln der Federzinken eine nach längerer Betriebsdauer korrodierte Schraubverbindung zu lösen ist und damit ein entsprechend hoher Aufwand bei der Wartung entsteht. Derartige verschraubte Federzinken sind in ihrer Anwendung auch an landwirtschaftlichen Bodenbearbeitungsmaschinen wie Sämaschinen, Heuwendern, Mähmessern, Striegelmaschinen für Golfplätze o. dgl. bekannt (DE 100 43 851 A1). Gemäß US-A-3,964,243 ist ein Rasenmäher vorgeschlagen, der einen um eine vertikale Hochachse drehbaren Träger mit zwei Federzinken aufweist. Diese werden so gehalten, dass bei der Rotation des Trägers jeweilige Schwenk- oder Kippverlagerungen möglich bleiben. In US 2006/0236670 A1 wird an einem Rasenmäher eine Vertikutiereinheit angeordnet, die an einer Tragplatte jeweilige Federzinken aufweist. Diese sind mit einer endseitigen Drahtwendel versehen, so dass damit eine Haltestange aufnehmbar ist und die Federzinken auf dieser schwenkbar sind.

Die Erfindung befasst sich mit dem Problem, ein Landschaftspflegegerät zu schaffen, bei dessen als Zusatzbaugruppe vorgesehenen Vertikutierer eine einfachere Montage von Federzinken möglich ist und dabei nach schnellem Austausch auch einzelner der mit geringen Gestehungskosten bereitstellbaren Federzinken der Tragbalken langzeitig wiederholt einsetzbar bleibt.

Die Erfindung löst diese Aufgabe mit einem Landschaftspflegegerät mit den Merkmalen des Anspruchs 1. Weitere vorteilhafte Ausgestaltungen ergeben sich aus den Ansprüchen 2 bis 16.

Das Landschaftspflegegerät in Form eines Rasentraktors, einer Kehrmaschine o. dgl. Einrichtung weist als Bearbeitungswerkzeug zumindest einen Vertikutierer auf, wobei dieser erfindungsgemäß mit als Wirkeinheit zur Bodenbearbeitung einsetzbaren Federzinken versehen ist, die nur durch eine unmittelbare formschlüssige Verbindung am Tragbalken zu fixieren sind.

Damit wird eine wesentlich vereinfachte Baueinheit geschaffen, bei der die Federzinken nach Art von "verriegelbaren Borsten" in einer formschlüssigen Verbindungslage am Tragbalken nur eingespannt werden und damit eine überraschend stabile Funktionseinheit erreicht wird.

Durch entsprechende Optimierung dieser Steck-Spann-Halterung wird eine biegestabile und verdrehsichere Funktionslage der insbesondere beim Vertikutieren optimal wirkenden Federzinken erreicht. Bei einer alters- bzw. verschleißbedingten Auswechslung-auch einzelner der Federzinken ist mit geringem technischem Aufwand eine schnelle Demontage möglich, und durch einen vergleichsweise einfachen Steckvorgang können neue Federzinken unmittelbar in den Tragbalken eingesteckt bzw. eingepresst und durch elastische Rückstellbewegung eines Teilabschnittes der Federzinken fixiert werden.

Die erfindungsgemäß geformten Federzinken sind dabei einenends mit einem als Stützkontur nutzbaren Formbereich versehen, so dass dieser Abschnitt der Federzinken in eine Aufnahmeöffnung des Tragbalkens einführbar und an einen als Gegenlager wirkenden Anlagebereich des Tragbalkens anlegbar ist, derart, dass eine "vorgespannte" Stützstellung erreicht ist. Für sämtliche dieser weitgehend variabel gestaltbaren Federzinkenausführungen ist eine zusätzliche Halterung in Form von Schrauben, Splinten o. dgl. Sicherungselementen entbehrlich, so dass für Landschaftspflegegeräte eine insbesondere die private Nutzung und Reparatur vereinfachende Konstruktion erreicht ist.

Das Konzept der formschlüssig fixierten Federzinken sieht vor, dass damit auch rotierend antreibbare Werkzeuge ausgerüstet werden können. Auf dem dabei als Stützwelle ausgebildeten Tragbalken können die Federzinken wendelförmig und mehrreihig ausgerichtet sein.

Bei einer Anwendung der formschlüssig fixierten Federzinken auf einem als Kehrbürste vorgesehenen Werkzeug ist lediglich eine in radialer Richtung zugfeste Sicherung der Federzinken erforderlich, so dass zusätzliche Maßnahmen zur drehsicheren Aufnahme und Abstützung der Federzinken entbehrlich sind.

Der Anwendungsbereich dieser erfindungsgemäßen Federzinken-Halter-Konstruktion ist nicht auf die vorteilhafte Anwendung bei Landschaftspflegegeräten in Privatgärten o. dgl. beschränkt. Vielmehr kann diese neue Baueinheit auch bei landwirtschaftlichen Geräten zur Bodenbearbeitung, an Heuwerbungsmaschinen o. dgl. Aggregaten eingesetzt werden.

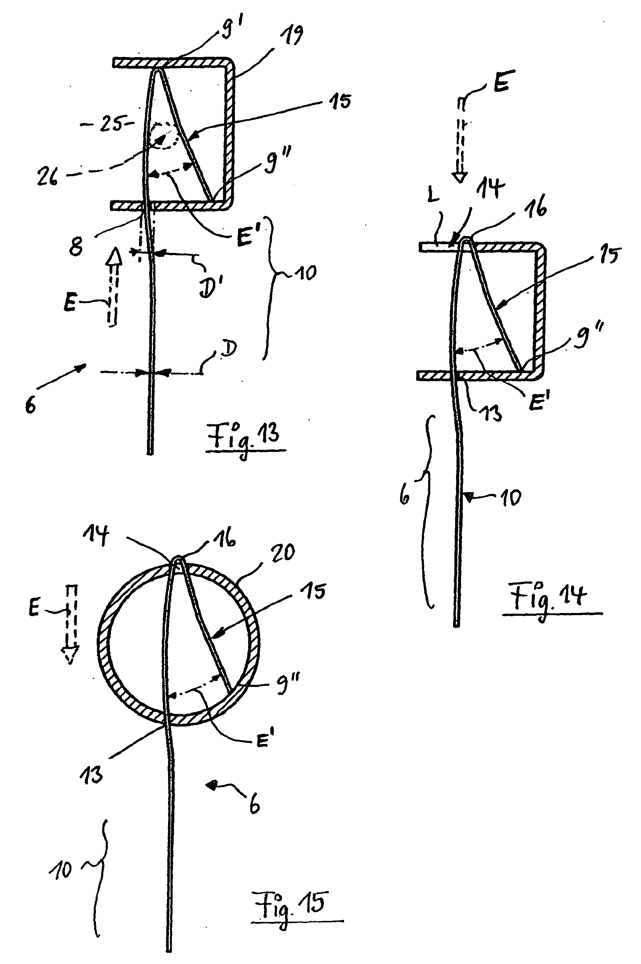

Weitere Einzelheiten und vorteilhafte Ausgestaltungen der Erfindung ergeben sich aus der nachfolgenden Beschreibung und der Zeichnung, in der mehrere Ausführungsbeispiele des Landschaftspflegegerätes mit den erfindungsgemäßen Federzinken näher veranschaulicht sind, wobei Figuren 13 und 16 bis 18 keine Ausführungsform der Erfindung zeigen. In der Zeichnung zeigen:
- Fig. 1: eine Perspektivdarstellung auf eine schematisch dargestellte Ma- schine zur Landschaftspflege mit vorderseitigem Vertikutierer,
- Fig. 2: eine vergrößerte Ausschnittsdarstellung des Federzinkens im Be- reich eines Tragbalkens am Vertikutierer,
- Fig. 3: eine Ansicht ähnlich Fig. 2 mit den einzelnen Federzinken in Einbau- lage am Tragbalken,
- Fig. 4 bis Fig. 6: jeweilige Perspektivdarstellungen ähnlich Fig. 3 mit den Federzinken an unterschiedlich ausgebildeten Tragbalken,
- Fig. 7 bis Fig. 12: jeweilige Einzeldarstellungen unterschiedlicher Ausführungsformen des erfindungsgemäßen Federzinkens,
- Fig. 13 bis Fig. 15: jeweilige Querschnittsdarstellungen des Halters des Vertikutierers mit in unterschiedlichen Spannstellungen gehaltenen Federzinken,
- Fig. 16: eine Ausführung des mit zwei Borstenteilen geformten Federzin- kens,
- Fig. 17: eine Ausführung des Federzinkens ähnlich Fig. 16 im Verbindungs- bereich am Tragbalken,
- Fig. 18: eine zur Festlegung des Federzinkens gemäß Fig. 17 vorgesehene Lasche,
- Fig. 19: eine Prinzipdarstellung des Federzinkens ähnlich Fig. 2 mit einer vereinfachten Haltekontur, und
- Fig. 20: jeweilige Ausführungsvarianten gemäß a) bis h) mit unterschiedlich geformten Federzinken ähnlich Fig. 19.

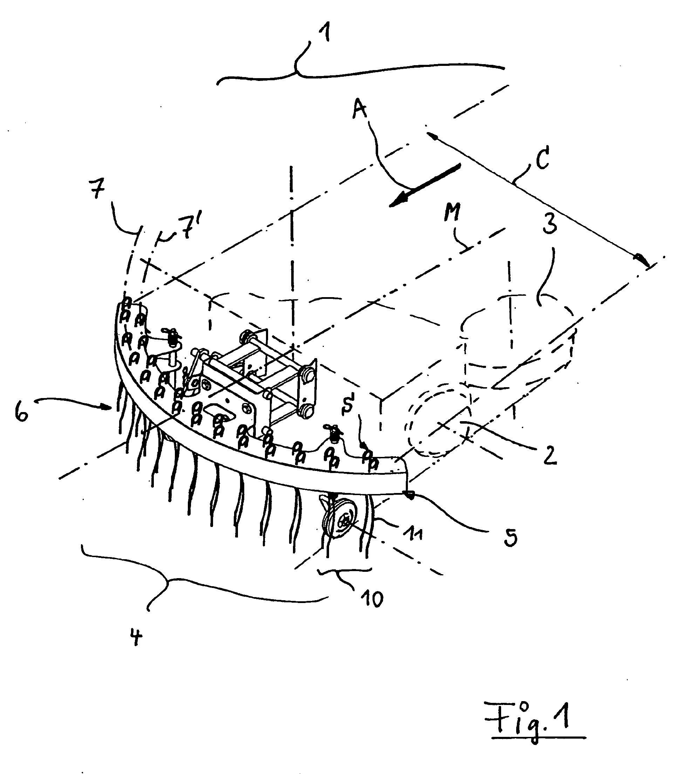

In Fig. 1 ist ein insgesamt mit 1 bezeichnetes Landschaftspflegegerät dargestellt, wobei schematisch deutlich wird, dass dieses in Form einer Kehrmaschine, eines Rasentraktors o. dgl. Baugruppe ausgeführt sein kann. Für den Einsatz derartiger Landschaftspflegegeräte 1 hat es sich als vorteilhaft herausgestellt, dass mehrere Pflege- bzw. Bodenbearbeitungswerkzeuge in das Konzept dieser Maschine integrierbar sind. In Fig. 1 wird deutlich, dass zusätzlich zu einem in Arbeitsrichtung A hinter jeweiligen Stützrädern 2 angeordneten Mähwerk 3 weitere Aggregate mit dem Gerät verbindbar sein können. Dargestellt ist eine insgesamt mit 4 bezeichnete Vertikutiervorrichtung. Diese ist als eine jeweilige Federzinken 6 an einem Tragbalken 5 als Wirkbaugruppe aufweisende Konstruktion ausgeführt.

Diese Ausführung der als Zusatzbaugruppe konzipierten Vertikutiervorrichtung 4 zeichnet sich erfindungsgemäß dadurch aus, dass am Tragbalken 5 unmittelbar mit diesem formschlüssig verbindbare Federzinken 6 vorgesehen sind. Damit kann beim Schnitt von Rasen o. dgl. Bearbeitungen ein vorgelagertes Vertikutieren erfolgen, da dieses System als überraschend effektiv einsetzbare Baueinheit aufgebaut ist.

Dieser - als eine Ausführung der erfindungsgemäßen Bearbeitungsvorrichtung 4 vorgesehene - Vertikutierer 4 kann dabei mit den "feststehenden" Federzinken 6 versehen sein, oder diese sind an einer Antriebswelle (nicht dargestellt) so fixiert, dass - im Unterschied zur "geschobenen" Einheit - ein rotierender Vertikutierer gebildet ist.

In an sich bekannter Ausführung wird die jeweilige Arbeitsbreite C dieser Vertikutiervorrichtung 4 dadurch vorgegeben, dass am Tragbalken 5 mehrere in einer Reihenanordnung 7 ausgerichtete Federzinken 6 vorgesehen sind. Bei der dargestellten Vertikutiervorrichtung 4 ist der Tragbalken 5 so ausgebildet, dass zwei Reihen 7, 7' der Federzinken 6 aufnehmbar sind.

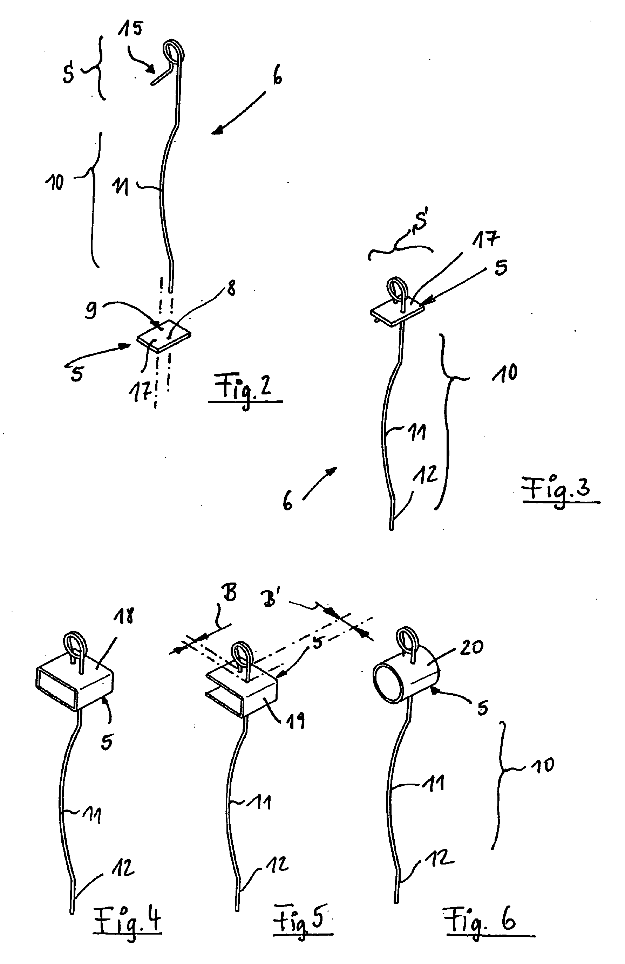

Aus der Zusammenschau von Fig. 2 und Fig. 3 wird deutlich, dass zur Realisierung der unmittelbaren formschlüssigen Balken-Zinken-Verbindung die Federzinken 6 mit zumindest einer eine Aufnahmeöffnung 8 des Tragbalkens 5 durchgreifenden und an diesem einen Anlagebereich 9 definierenden Stützkontur S geformt sind. Damit wird erreicht, dass die Federzinken 6 mittels dieser Stützkontur S weitgehend selbsthemmend am Tragbalken 5 festlegbar sind. In den Darstellungen gemäß Fig. 4 bis 20 werden nachfolgend unterschiedliche Ausführungsformen dieser für die unmittelbare formschlüssige Abstützung vorgesehenen Federzinken 6 näher beschrieben.

In den Darstellungen sind die gezeigten Federzinken 6 als im Querschnitt kreisförmige Konturstäbe ausgebildet, wobei auch andere Querschnitte der als einstückige Formteile aus Federstahl vorgesehenen Federzinken 6 denkbar sind (nicht dargestellt).

Aus den Einbaulagen der am Tragbalken 5 fixierten Federzinken 6 gemäß Fig. 3 bis Fig. 6 wird deutlich, dass die einerseits am Tragbalken 5 fixierten Federzinken 6 andererseits einen frei abragenden Borstenteil 10 als den zur Bodenbearbeitung vorgesehenen Wirkbereich definieren. Dieser Borstenteil 10 kann in Längsrichtung mit einer bogenförmigen Formkontur 11 versehen sein, die in einen vorderen spitzen Bereich 12 übergeht. Mit diesem Bereich 12 wird eine in das Gras bzw. den Boden eingreifende Wirkzone definiert, und die bogenförmige Formkontur 11 gibt optimale Arbeitsbedingungen in der Einbaulage (Fig. 1) vor. Vorgesehen ist dabei, dass die Federzinken 6 in Arbeitsrichtung A (Fig. 1) konkav ausgerichtet sind. Damit wird insbesondere vor dem nachgeordneten Mähwerk 3 eine optimale Erfassung und "Aufrichtung" der Rasen- und Bodenteile erreicht, so dass nach dieser zweiphasigen Bearbeitung eine optimale Säuberung und Auflockerung der Bodenstruktur bzw. Beschneidung des Rasens gewährleistet sind.

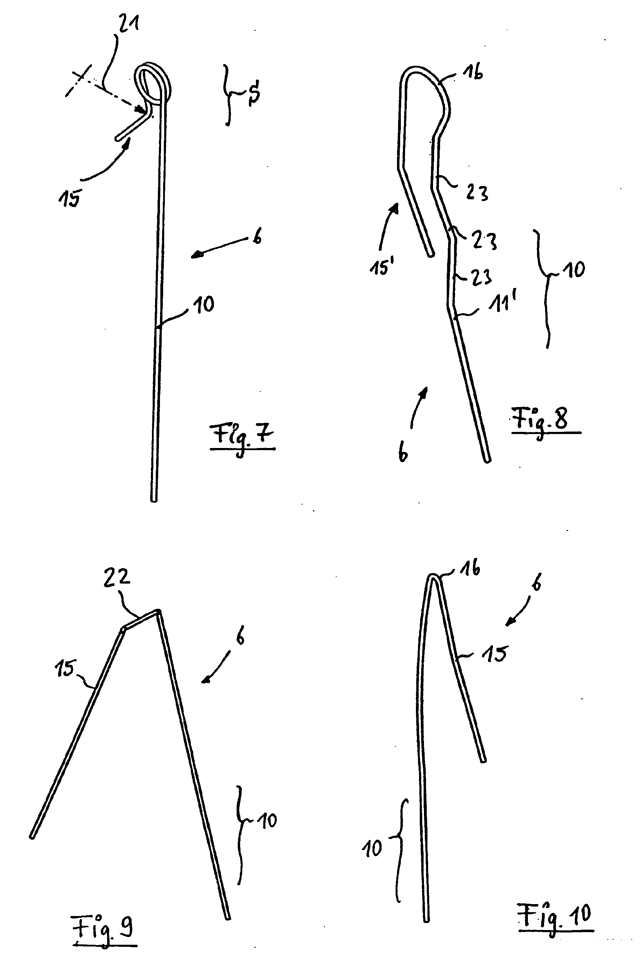

Die Zusammenschau von Fig. 3 bis 6 und Fig. 14 und 15 zeigt, dass der Tragbalken 5 vorzugsweise mit zwei Aufnahmeöffnungen 8, 9 bzw. 13, 14 versehen ist. Dabei greift in eine erste der Aufnahmeöffnungen - 8 bzw. 13 - einenends der Federzinken 6 mit dem oberen Ende seines Borstenteils 10 ein und in die jeweils zweite Aufnahmeöffnung bzw. den Anlagebereich - nämlich 9 und 14 - greift der Federzinken 6 andererseits mit einem Stützansatz 15 der Stützkontur S ein. Dieser Grundaufbau der Federzinken 6 zur unmittelbaren formschlüssigen Verbindung wiederholt sich mit entsprechenden Variationen in sämtlichen der dargestellten Ausführungsformen gemäß Fig. 7 bis 20.

Aus den geschnittenen Darstellungen gemäß Fig. 14 und 15 wird deutlich, dass zumindest eine der Aufnahmeöffnungen, nämlich die Öffnungen 14, als ein Langloch L geformt sein kann, so dass in Abweichung zur Aufnahmeöffnung 13 ein ganzer bogenförmig verlaufender Bereich 16 des Stützansatzes 15 der Federzinken 6 erfasst wird und damit deren Fixierung stabilisiert ist. Die Montagerichtung dieser Baugruppe ist mit einem Pfeil D angedeutet. In der dargestellten Einbaulage ist eine formschlüssige Verbindung erreichbar, die den Federzinken 6 auch drehfest fixiert.

In Fig. 5 ist das vorbeschriebene paarweise Zusammenwirken von Aufnahmeöffnungen 8 und 9 verdeutlicht, wobei diese durch einen mit B, B' bezeichneten Abstand seitlich versetzt zueinander in den Tragbalken 5 eingebracht sind. Bereits damit kann mit geringem technischem Aufwand eine Verdrehsicherung für die Federzinken 6 erreicht werden.

In einfachster Ausführung (Fig. 3) ist vorgesehen, dass der Tragbalken 5 aus einer einlagigen Plattenstrebe 17 besteht und in dieser die zwei Aufnahmeöffnungen 8, 9 (Anlagebereich) eingebracht sind (Fig. 2). Die Darstellungen gemäß Fig. 4 bis 6 und Fig. 13 bis 15 verdeutlichen eine weitere Ausführung des Tragbalkens 5, wobei dieser als ein geschlossenes oder zumindest einseitig offenes Hohlprofilteil 18, 19, 20 ausgebildet ist. Es versteht sich, dass dabei zumindest die Aufnahmeöffnung 8 mehrere Wandungsbereiche des Hohlprofils durchgreifen kann (Fig. 14). Insbesondere ist vorgesehen, dass die Hohlprofilteile eine U-förmige 19, rechteckige 18 oder kreisringförmige 20 Querschnittskontur aufweisen (Fig. 4 bis 6 bzw. Fig. 13 bis 15).

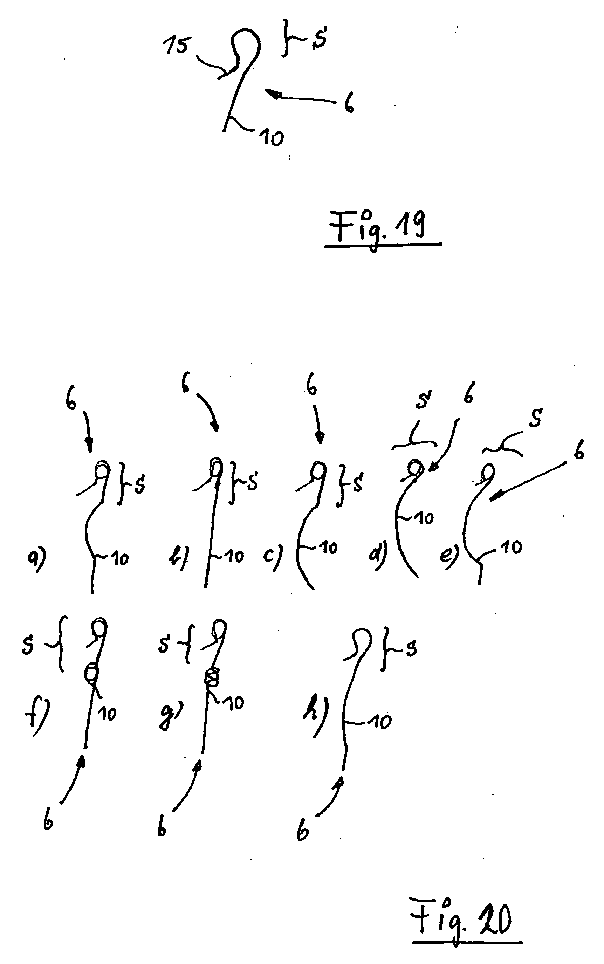

Ausgehend von Fig. 7 wird in Zusammenschau mit Fig. 19 und 20 deutlich, dass die Federzinken 6 im Bereich ihrer Stützkontur S als eine ein- oder mehrfach gewendelte Doppelschraube geformt sein können. Ausgehend von dieser Doppelschraube ist der jeweilige Stützansatz 15 so geformt, dass dieser im Bereich seines freien Endes des einen Anlageradius 21 formt, mit dem in Einbaulage (Fig. 3 bis 6) eine optimale Abstützung möglicht ist.

In Fig. 8 bis 11 sind weitere Ausführungsformen von Federzinken 6 dargestellt, wobei diese im Bereich ihrer Stützkontur S einen an den Versatz B, B' der Aufnahmeöffnungen 8, 9 bzw. 13, 14 im Tragbalken 5 angepassten Querformbereich 22 (Fig. 9) aufweisen können. Bei der Ausführung gemäß Fig. 8 ist der Stützansatz 15' zum Formbereich 11' des Federzinkens 6 hin zurückgebogen, und am Bereich 11' des Borstenteils 10 sind mehrere Formbereiche 23 vorgesehen.

Die Ausführungsformen gemäß Fig. 10 bis 12 zeigen weitere vereinfachte Federzinken 6, wobei in Fig. 13 bis 15 die jeweilige Einbaulage der Ausführung dieser Felderzinken 6 gemäß Fig. 10 deutlich wird.

In der keine Ausführung der Erfindung zeigenden Fig. 13 ist die Aufnahmeöffnung 8 mit einem Durchmesser D' versehen, der im wesentlichen doppelt so groß ist wie der Durchmesser D des Federzinkens 6. Bei der Montage E ist der vordere Stützansatz 15 in Pfeilrichtung E' zum Borstenteil 10 hin verlagert, so dass ein Einstecken in die Öffnung 8 erfolgen kann. Danach verlagert sich der Stützansatz 15 in die dargestellte Position und wird bei 9' und 9" im Anlagebereich fixiert. Denkbar ist auch, die bereits fixierten Federzinken 6 durch eine im Innenraum 25 des Hohlprofils 19 verlaufende Querwelle 26 o. dgl. Steckteil durch zusätzlichen Formschluss drehfest zu sichern.

Bei der Ausführung gemäß Fig. 14 ist der Federzinken 6 in Richtung E so montierbar, dass der Borstenteil 10 durch die Öffnung 13 geführt wird und danach der bogenförmige Stützbereich 16 an den Flanken des Langloches L drehfest gehalten ist. Auch in Fig. 15 wird bei 16 eine zusätzliche Anlage definiert, so dass der Federzinken 6 drehfest im Hohlprofil 20 gehalten wird.

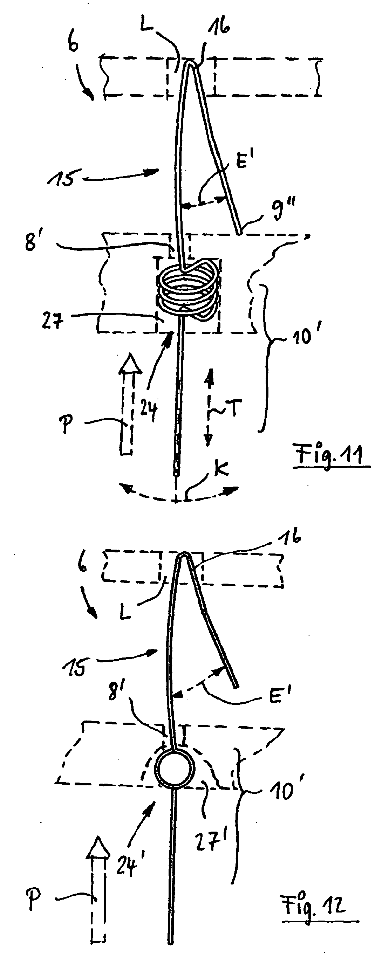

Entsprechende Einbaulagen ergeben sich dann, wenn die im Bereich ihres Borstenteils 10' mit Spezialkonturen 24 versehenen Federzinken 6 gemäß Fig. 11 und 12 in den Tragbalken 5 eingepresst werden (Pfeil P). Dabei durchgreift der Stützansatz 15 eine Bohrung 8' und wird in einem Langloch L mit dem Formbogen 16 und dem Bereich 9" drehfest fixiert. Gleichzeitig greift die gewendelte Spezialkontur 24, 24' in eine als Sackloch 27, 27' o. dgl. Formausnehmung vorgesehene Öffnung im Tragbalken 5 ein, so dass zusätzlich zur möglichen ("Pendel")-Bewegung K (Fig. 11) eine Stauchbewegung T des Federzinkens 6 kompensiert werden kann und damit der Borstenteil 10' effektiv bei der Bearbeitung von Boden, Grasflächen o. dgl. wirksam ist. In Fig. 12 ist eine der vorbeschriebenen Ausführung ähnliche Gestaltung des Federzinkens 6 dargestellt.

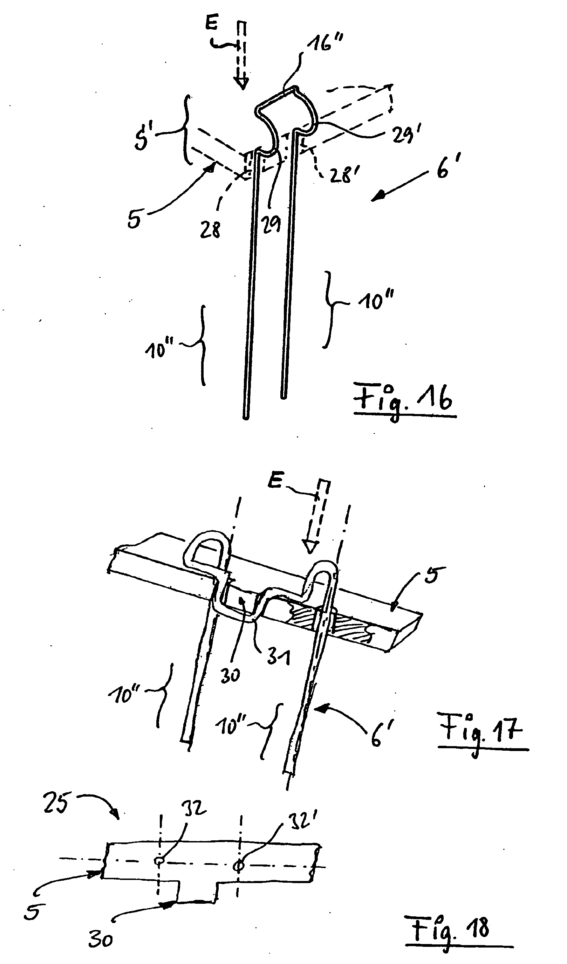

In Fig. 16 ist eine weitere von der Erfindung nicht unmittelbar erfasste Ausführungsform eines Federzinken 6' dargestellt, wobei dieser ausgehend von einem einstückigen Stabteil mit zwei Borstenteilen 10" geformt ist und diese eine gemeinsame Stützkontur S' aufweisen. Dieser Federzinken 6' ist in Richtung E in jeweilige Öffnungen 28, 28' einsteckbar, und der obere Formbereich 16" kann am Tragbalken 5 durch eine Klemmverbindung gehalten sein, derart, dass die elastischen Formbögen 29, 29' in einer entsprechenden Stützstellung positioniert werden.

In Fig. 17 und Fig. 18 ist eine dem Federzinken 6' gemäß Fig. 16 ähnliche und keine Ausführung der Erfindung zeigende Konstruktion in Einbaulage E gezeigt, wobei ein zusätzlicher Tragansatz 30 am Tragbalken 5 (Fig. 18) zur Fixierung der Baueinheit vorgesehen ist. Der Federzinken 6' weist einen den Trag-Bögen 29, 29' (Fig. 16) ähnlichen Formansatz 31 auf, der in der gemäß Fig. 17 gezeigten formschlüssigen Verbindungslage den Tragansatz 30 umgreift, wobei die beiden Borstenteile 10' gleichzeitig jeweilige Durchgangsöffnungen 32, 32' durchgreifen und damit eine elastisch verspannte Position mit entsprechender formschlüssiger Anlage erreicht ist.

In Fig. 19 ist ausgehend von der bevorzugten Ausführung gemäß Fig. 2 eine einfach gebogene Ausführung des Federzinkens 6 dargestellt, und in Fig. 20 zeigen jeweilige Ausführungen gemäß a) bis h) denkbare Gestaltungen von Federzinken 6, die im Bereich der Stützkontur S bzw. des jeweiligen Borstenteils 10 mit variablen Biegekonturen geformt sind.

## Patentansprüche

1. Landschaftspflegegerät in Form eines mit Pflege- bzw. Bodenbearbeitungswerkzeugen versehenen Rasentraktors, einer Kehrmaschine, deren als Vertikutierer ausgebildete Bearbeitungsvorrichtung (4) an einem Tragbalken (5) fixierte und bei der Bodenbearbeitung mittels einer Schubbewegung (A) verlagerbare Federzinken (6) aufweist, **dadurch gekennzeichnet, dass** der Vertikutierer mit jeweils unmittelbar formschlüssig mit dem Tragbalken (5) verbindbaren Federzinken (6) versehen ist, dabei der Tragbalken (5) zwei jeweils als Aufnahmeöffnung und Anlagebereich (8, 9; 13, 14) wirksame Öffnungen aufweist und die Federzinken (6) zur Steck-Spann-Halterung mit einer die eine Aufnahmeöffnung (8) des Tragbalkens (5) durchgreifenden sowie andererseits mit der anderen Öffnung den Anlagebereich (9, 9', 9") definierenden Stützkontur (S; 16) geformt sind, derart, dass die in den Tragbalken (5) einsteckbaren bzw. einpressbaren Federzinken (6) mittels dieser Stützkontur (S; 16) weitgehend selbsthemmend in einer vorgespannten Stützstellung am Tragbalken (5) festlegbar sind.

2. Landschaftspflegegerät nach Anspruch 1, **dadurch gekennzeichnet, dass** der Tragbalken (5) mehrere in einer Reihenanordnung (7) ausgerichtete Federzinken (6) aufweist.

3. Landschaftspflegegerät nach Anspruch 1 oder 2, **dadurch gekennzeichnet, dass** die Bearbeitungsvorrichtung (4) mehrere Reihenanordnungen (7, 7') der Federzinken (6) aufweist.

4. Landschaftspflegegerät nach einem der Ansprüche 1 bis 3, **dadurch gekennzeichnet, dass** die Federzinken (6) als im Querschnitt kreisförmige Konturstäbe ausgebildet sind.

5. Landschaftspflegegerät nach einem der Ansprüche 1 bis 4, **dadurch gekennzeichnet, dass** die einerseits in Einbaulage am Tragbalken (5) kraft- und formschlüssig fixierten Federzinken (6) andererseits einen frei abragenden Borstenteil (10) definieren.

6. Landschaftspflegegerät nach Anspruch 5, **dadurch gekennzeichnet, dass** der Borstenteil (10) in Längsrichtung eine bogenförmige Formkontur (11) aufweist.

7. Landschaftspflegegerät nach einem der Ansprüche 1 bis 6, **dadurch gekennzeichnet, dass** der Federzinken (6) einenends mit einem Borstenteil (10) die erste Öffnung (8; 13) durchgreift und der Federzinken (6) anderenends mit einem Stützansatz (15) der Stützkontur (S) in der zweiten Öffnung (9; 14) fixierbar ist.

8. Landschaftspflegegerät nach einem der Ansprüche 1 bis 7, **dadurch gekennzeichnet, dass** zumindest eine der Aufnahmeöffnungen (14) als ein Langloch (L) geformt ist.

9. Landschaftspflegegerät nach einem der Ansprüche 1 bis 8, **dadurch gekennzeichnet, dass** die paarweise zusammenwirkenden Aufnahmeöffnungen (8, 9) beabstandet und in Längs- oder Querrichtung des Tragbalkens (5) versetzt zueinander (B, B') angeordnet sind.

10. Landschaftspflegegerät nach einem der Ansprüche 1 bis 9, **dadurch gekennzeichnet, dass** der Tragbalken (5) aus einer einlagigen Plattenstrebe (17) besteht und in dieser die zwei Aufnahmeöffnungen (8, 9) vorgesehen sind.

11. Landschaftspflegegerät nach einem der Ansprüche 1 bis 10, **dadurch gekennzeichnet, dass** der Tragbalken (5) als ein geschlossenes oder zumindest einseitig offenes Hohlprofilteil (18, 19, 20) ausgebildet ist und dabei koaxiale Aufnahmeöffnungen (8) in mehreren der Wandungsbereiche vorgesehen sind.

12. Landschaftspflegegerät nach Anspruch 11, **dadurch gekennzeichnet, dass** das Hohlprofilteil eine U-förmige (19), rechteckige (18) oder kreisringförmige (20) Querschnittskontur aufweist.

13. Landschaftspflegegerät nach einem der Ansprüche 1 bis 12, **dadurch gekennzeichnet, dass** die Federzinken (6) im Bereich ihrer Stützkontur (S) bzw. des Stützansatzes (15) als eine zumindest einfach gewendelte Doppelschraube geformt sind und dabei zumindest der Stützansatz (15) im Bereich eines freien Endes einen in der Aufnahmeöffnung (9) des Tragbalkens (5) wirksamen Anlageradius (21) aufweist.

14. Landschaftspflegegerät nach einem der Ansprüche 1 bis 13, **dadurch gekennzeichnet, dass** die Federzinken (6) im Bereich der Stützkontur (S) einen an den Versatz (B) der Aufnahmeöffnungen (8, 9; 13, 14) im Tragbalken (5) angepassten Querformbereich (22) definieren.

15. Landschaftspflegegerät nach einem der Ansprüche 1 bis 14, **dadurch gekennzeichnet, dass** die Federzinken (6) ausgehend von einem einstückigen Stabteil mit zwei Borstenteilen (10") geformt sind und diese eine gemeinsame Stützkontur (S') aufweisen.

16. Landschaftspflegegerät nach einem der Ansprüche 1 bis 15, **dadurch gekennzeichnet, dass** die Bearbeitungsvorrichtung (4) mit zumindest in einer Bearbeitungsphase zusätzlich drehend antreibbaren Federzinken (6) versehen ist.

## Claims

1. Landscape maintenance machine in the form of a lawn tractor provided with tools for maintenance or for working on the ground or in the form of a sweeping machine, whose working arrangement (4) takes the form of a de-thatcher and has resilient tines (6) which are fixed to a support bar (5) and which are displaceable by means of a thrust movement (A) as work is done on the ground, **characterised in that** the de-thatcher is provided with resilient tines (6) each of which can be connected directly to the support bar (5) by positive interengagement, the support bar (5) having in this case two openings which act respectively as a receiving opening and a seating region (8, 9; 13, 14) and the resilient tines (6) being formed, for the purpose of clip-in mounting, to have a configured support portion (S, 16) which engages through one receiving opening (8) in the support bar (5) and which on the other hand, with the other opening, defines the seating region (9, 9', 9"), in such a way that the resilient tines (6), which can be plugged or pressed into the support bar (5), can be fixed to the support bar (5) in a preloaded supported position by a largely self-locking action by means of this configured support portion (S, 16).

2. Landscape maintenance machine according to claim 1, **characterised in that** the support bar (5) has a plurality of resilient tines (6) aligned in a laid-out row (7).

3. Landscape maintenance machine according to claim 1 or 2, **characterised in that** the working arrangement (4) has a plurality of laid-out rows (7, 7') of resilient tines (6).

4. Landscape maintenance machine according to one of claims 1 to 3, **characterised in that** the resilient tines (6) take the form of configured rods of circular cross-section.

5. Landscape maintenance machine according to one of claims 1 to 4, **characterised in that** the resilient tines (6), which on the one hand are fixed to the support bar (5) by friction and positive interengagement in the installed position, on the other hand define a freely projecting brush part (10).

6. Landscape maintenance machine according to claim 5, **characterised in that** the brush part (10) has an arcuate configuration (11) in the longitudinal direction.

7. Landscape maintenance machine according to one of claims 1 to 6, **characterised in that**, at one end of the resilient tine (6), a brush part (10) thereof passes through the first opening (8; 13) and, at the other end, the resilient tine (6) can be fixed in the second opening (9; 14) by a supporting projection (15) from the configured support portion (S).

8. Landscape maintenance machine according to one of claims 1 to 7, **characterised in that** at least one of the receiving openings (14) is in the form of a slotted hole (L).

9. Landscape maintenance machine according to one of claims 1 to 8, **characterised in that** the receiving openings (8, 9), which co-operate in pairs, are arranged at a spacing from one another and, in the longitudinal or transverse direction of the support bar (5), with an offset from one another.

10. Landscape maintenance machine according to one of claims 1 to 9, **characterised in that** the support bar (5) comprises a single-layered strut (17) of plate material and the two receiving openings (8, 9) are provided therein.

11. Landscape maintenance machine according to one of claims 1 to 10, **characterised in that** the support bar (5) takes the form of a hollow profiled part (18, 19, 20) which is closed or which is open on at least one side and in this case co-axial receiving openings (8) are provided in a plurality of the wall regions.

12. Landscape maintenance machine according to claim 11, **characterised in that** the outline of the hollow profiled part is U-shaped (19), rectangular (18) or circular (20) in cross-section.

13. Landscape maintenance machine according to one of claims 1 to 12, **characterised in that**, in the region of their configured support portion (S) or supporting projection (15), the resilient tines (6) are in the form of at least one turn of a double helix and in this case at least the supporting projection (15) has, in the region of its free end, a seating radius (21) which acts in the receiving opening (9) in the support bar (5).

14. Landscape maintenance machine according to one of claims 1 to 13, **characterised in that**, in the region of the configured support portion (S), the resilient tines (6) have a shaped transverse region which is matched to the offset (B) of the receiving openings (8, 9; 13, 14) in the support bar (5).

15. Landscape maintenance machine according to one of claims 1 to 14, **characterised in that**, starting from a one-piece rod part, the resilient tines (6) are shaped to have two brush parts (10") and these latter have a common configured support portion (S').

16. Landscape maintenance machine according to one of claims 1 to 15, **characterised in that** the working arrangement (4) is provided with resilient tines (6) which can, in addition, be driven in rotation at least in a working phase.

## Revendications

1. Appareil pour l'entretien paysager sous la forme d'un tracteur-tondeuse pourvu d'outils d'entretien ou de traitement du sol, d'une balayeuse, dont le dispositif de traitement (4) réalisé comme un scarificateur présente des dents élastiques (6) fixées sur une poutre porteuse (5) et pouvant être déplacées lors du traitement du sol par un mouvement de poussée (A), **caractérisé en ce que** le scarificateur est pourvu de dents élastiques (6) pouvant être reliées respectivement directement par complémentarité de formes à la poutre porteuse (5), la poutre porteuse (5) présente deux ouvertures agissant respectivement comme ouverture de réception et zone d'installation (8, 9 ; 13, 14) et les dents élastiques (6) sont formées pour la fixation par enfichage et serrage avec un contour d'appui (S ; 16) traversant une ouverture de réception (8) de la poutre porteuse (5) ainsi que définissant d'autre part avec l'autre ouverture la zone d'installation (9, 9', 9") de telle manière que les dents élastiques (6) pouvant être emboîtées ou enfoncées dans la poutre porteuse (5) puissent être fixées à l'aide de ce contour d'appui (S ; 16) en grande partie par autoblocage dans une position d'appui précontrainte sur la poutre porteuse (5).

2. Appareil pour l'entretien paysager selon la revendication 1, **caractérisé en ce que** la poutre porteuse (5) présente plusieurs dents élastiques (6) orientées dans une rangée (7).

3. Appareil pour l'entretien paysager selon la revendication 1 ou 2, **caractérisé en ce que** le dispositif de traitement (4) présente plusieurs rangées (7, 7') de dents élastiques (6).

4. Appareil pour l'entretien paysager selon l'une quelconque des revendications 1 à 3, **caractérisé en ce que** les dents élastiques (6) sont réalisées comme des barres profilées, dont la section transversale est circulaire.

5. Appareil pour l'entretien paysager selon l'une quelconque des revendications 1 à 4, **caractérisé en ce que** les dents élastiques (6) fixées à force et par complémentarité de formes d'une part en position d'installation sur la poutre porteuse (5) définissent d'autre part une partie de soies (10) dépassant librement.

6. Appareil pour l'entretien paysager selon la revendication 5, **caractérisé en ce que** la partie de soies (10) présente un contour (11) arqué dans le sens longitudinal.

7. Appareil pour l'entretien paysager selon l'une quelconque des revendications 1 à 6, **caractérisé en ce que** la dent élastique (6) traverse la première ouverture (8 ; 13) au niveau d'une extrémité avec une partie de soies (10) et la dent élastique (6) peut être fixée au niveau de l'autre extrémité à une saillie d'appui (15) du contour d'appui (S) dans la seconde ouverture (9 ; 14).

8. Appareil pour l'entretien paysager selon l'une quelconque des revendications 1 à 7, **caractérisé en ce qu'**au moins l'une des ouvertures de réception (14) est formée comme un trou oblong (L).

9. Appareil pour l'entretien paysager selon l'une quelconque des revendications 1 à 8, **caractérisé en ce que** les ouvertures de réception (8, 9) coagissant par paires sont espacées et disposées en déport l'une de l'autre dans le sens longitudinal ou transversal de la poutre porteuse (5).

10. Appareil pour l'entretien paysager selon l'une quelconque des revendications 1 à 9, **caractérisé en ce que** la poutre porteuse (5) se compose d'un étai de plaque (17) à une couche et les deux ouvertures de réception (8, 9) sont prévues dans celle-ci.

11. Appareil pour l'entretien paysager selon l'une quelconque des revendications 1 à 10, **caractérisé en ce que** la poutre porteuse (5) est réalisée comme une partie profilée creuse (18, 19, 20) fermée ou ouverte au moins d'un côté et des ouvertures de réception coaxiales (8) sont prévues dans plusieurs des zones de paroi.

12. Appareil pour l'entretien paysager selon la revendication 11, **caractérisé en ce que** la partie profilée creuse présente un contour de section en forme de U (19), rectangulaire (18) ou circulaire (20).

13. Appareil pour l'entretien paysager selon l'une quelconque des revendications 1 à 12, **caractérisé en ce que** les dents élastiques (6) sont formées dans la zone de leurs contours d'appui (S) ou de la saillie d'appui (15) comme une double vis spiralée au moins simplement et au moins la saillie d'appui (15) présente, dans la zone d'une extrémité libre, un rayon d'installation (21) agissant dans l'ouverture de réception (9) de la poutre porteuse (5).

14. Appareil pour l'entretien paysager selon l'une quelconque des revendications 1 à 13, **caractérisé en ce que** les dents élastiques (6) définissent, dans la zone du contour d'appui (S), une zone de forme transversale (22) adaptée au déport (B) des ouvertures de réception (8, 9 ; 13, 14) dans la poutre porteuse (5).

15. Appareil pour l'entretien paysager selon l'une quelconque des revendications 1 à 14, **caractérisé en ce que** les dents élastiques (6) sont formées en partant d'une partie de barre d'un seul tenant avec deux parties de soies (10") et celles-ci présentent un contour d'appui (S') commun.

16. Appareil pour l'entretien paysager selon l'une quelconque des revendications 1 à 15, **caractérisé en ce que** le dispositif de traitement (4) est pourvu de dents élastiques (6) pouvant être entraînées de manière rotative en outre au moins dans une phase de traitement.
